# EUROPÄISCHE PATENTANMELDUNG

(11) **EP 3 509 074 A1**
(43) Veröffentlichungstag der Anmeldung: **10.07.2019**
(21) Anmeldenummer: 18214503.7
(22) Anmeldetag: 20.12.2018
(51) Int. Cl.: G21K 1/10, H05G 1/26

(54) **VERFAHREN ZUR KALIBRIERUNG EINES HOCHSPANNUNGSGENERATORS EINER RÖNTGENRÖHRE IN EINEM RÖHREN-DETEKTOR-SYSTEM**

(30) Priorität: 04.01.2018 DE 102018100131
(71) Anmelder: YXLON International GmbH, 22419 Hamburg (DE)
(72) Erfinder: André, Schu, 21493 Schwarzenbek (DE)
(74) Vertreter: DTS Patent- und Rechtsanwälte Schnekenbühl und Partner mbB

(57) **Zusammenfassung**

Die Erfindung befasst sich mit einem Verfahren zur Kalibrierung eines Hochspannungsgenerators einer Röntgenröhre 1 in einem Röhren-Detektor-System in einem vorgebbaren Hochspannungsbereich mit folgenden Schritten: einbringen eines Filtersets 4 mit mindestens zwei Filtern 6, 7 aus unterschiedlichen Materialien 6a, 7a-f in den Röntgenstrahl 2 zwischen der Röntgenröhre 1 und einem Röntgendetektor 5, wobei das erste Material 6a des ersten Filters 6 seine K-Kante 9 außerhalb des Hochspannungsbereichs und das zweite Material 7a-f des zweiten Filters 7 seine K-Kante 9 innerhalb des vorgebbaren Hochspannungsbereichs hat; einstellen eines Sollwertes der Hochspannung an dem Hochspannungsgenerator der Röntgenröhre 1 und aufnehmen eines Röntgenbildes des Filtersets 4 durch den Röntgendetektor 5; aufnehmen weiterer Röntgenbilder des Filtersets 4 bei anderen Sollwerten der Hochspannung an dem Hochspannungsgenerator der Röntgenröhre 1; bilden des Verhältnisses zwischen den Signalen in den Röntgenbildern für das erste Material 6a und das zweite Material 7a-f für jeden einzelnen Sollwert der Hochspannung; bestimmen des Sollwertes der Hochspannung anhand der Einstellung am Hochspannungsgenerator, bei dem das Verhältnis einen Extremwert aufweist; berechnen des Unterschieds dieses Sollwertes der Hochspannung mit dem Wert der K-Kante 9 des zweiten Materials 7a-f; korrigieren des Sollwertes der Hochspannung um den berechneten Unterschied.

## Beschreibung

Die Erfindung befasst sich mit einem Verfahren zur Kalibrierung eines Hochspannungsgenerators einer Röntgenröhre in einem Röhren-Detektor-System in einem vorgebbaren Hochspannungsbereich

Bei einer Röntgenröhre definiert die anliegende Hochspannung die kinetische Energie der Elektronen und diese wiederum die maximale Energie der Röntgenstrahlung. Da die Absorption der Röntgenstrahlung in Materialien mit steigender Energie der Röntgenstrahlung geringer wird, ist die maximale Energie der Röntgenstrahlung für den Strahlenschutz von großer Bedeutung. Die Auslegung der Bleidicken erfolgt auf Basis der maximal einstellbaren Hochspannung. Die Zentrierung und auch die Fokussierung innerhalb der Röntgenröhre werden ebenfalls auf Basis der Hochspannung eingestellt. Es ist daher sehr wichtig, dass die Hochspannung korrekt vom Hochspannungsgenerator eingestellt wird. Eine Überprüfung der Hochspannung, mit beispielsweise einem Hochspannungsmessteiler, ist mit hohem Aufwand verbunden, da ein Hochspannungsmessteiler zwischen der Röntgenröhre und dem Hochspannungsgenerator elektrisch angeschlossen werden muss. Dies bedeutet regelmäßig, dass zwei Hochspannungskabel verlegt werden müssen. Ein solcher Messaufbau stellt einen hohen Umbauaufwand dar.

Die Aufgabe der Erfindung ist es, eine einfache Möglichkeit zur Verfügung zu stellen, mit der die angelegte Hochspannung in einer Röntgenröhre überprüft werden kann.

Die Aufgabe wird durch ein Verfahren mit den Merkmalen des Patentanspruchs 1 gelöst. Dieses sieht ein Kalibrierverfahren mit folgenden Schritten vor:
a) einbringen eines Filtersets mit mindestens zwei Filtern aus unterschiedlichen Materialien in den Röntgenstrahl zwischen der Röntgenröhre und einem Röntgendetektor, wobei das erste Material des ersten Filters seine K-Kante außerhalb des vorgebbaren Hochspannungsbereichs und das zweite Material des zweiten Filters seine K-Kante innerhalb des vorgebbaren Hochspannungsbereichs hat;
b) einstellen eines Sollwertes der Hochspannung an der Röntgenröhre und aufnehmen eines Röntgenbildes des Filtersets durch den Röntgendetektor;
c) aufnehmen weiterer Röntgenbilder des Filtersets bei anderen Sollwerten der Hochspannung an der Röntgenröhre;
d) bilden des Verhältnisses zwischen den Signalen in den Röntgenbildern für das erste Material und das zweite Material für jeden einzelnen Sollwert der Hochspannung;
e) bestimmen des Sollwertes der Hochspannung, bei dem das Verhältnis einen Extremwert aufweist;
f) berechnen des Unterschieds dieses Sollwertes der Hochspannung mit dem Wert der K-Kante des zweiten Materials;
g) korrigieren des Sollwertes der Hochspannung um den berechneten Unterschied.

Dadurch wird das Messverfahren vereinfacht, da die benötigten Signale zur selben Zeit mit demselben Messgerät gemessen werden können. Die zu verwendenden Messmittel sind in einem Standard-Röntgensystem vorhanden.

Da anstatt eines aus dem Stand der Technik bekannten Dosimeters ein (Flach-)Detektor verwendet wird, ergibt sich als Vorteil, dass die Fläche des Röntgendetektors in einzelne Segmente unterteilt werden können, womit es möglich ist, eine Reihe von verschiedenen (Prüf-)Filter - auch deutlich mehr als die erfindungsgemäßen mindestens zwei - direkt vor dem Röntgendetektor zu platzieren und damit mehrere Hochspannungswerte zu prüfen, ohne den Messaufbau zwischenzeitlich ändern zu müssen. Dadurch, dass anstelle des Fluoreszenzsignals ein Durchlasssignal eines Materials - dasjenige des ersten Filters - gemessen wird, dessen Kantenenergie weit von der Kantenenergie des zweiten Filters, dessen K-Kante im Bereich der zu messenden Hochspannung, entfernt liegt, ist anders als bei der Verwendung eines Fluoreszenzsignals, keine zusätzlicher Abschirmung notwendig, um das Signal von der Streustrahlung zu trennen. Außerdem benötigt ein Aufbau unter Verwendung des Durchlasssignals weniger Platz als bei einem Fluoreszenzsignal. In den kleinen Kabinen von Materialprüfanlagen wird somit das Problem umgangen, den Platz finden zu müssen, das Fluoreszenzsignal in geeignetem Abstand mit geeigneter Abschirmung messen zu können. Das Filterset wird möglichst nah vor dem Röntgendetektor platziert, damit sich die Signale hinter den einzelnen Filtern möglichst wenig überlagern. Damit ist der Messaufbau auf vier Teile und eine Messanordnung reduziert. Die erfindungsgemäß gewonnenen Signale werden ins Verhältnis gesetzt und aus der Verhältniskurve und der bekannten Kantenenergie des jeweiligen Filters, die Energie der Elektronen bestimmt.

Eine vorteilhafte Weiterbildung der Erfindung sieht vor, dass zwischen Röntgenröhre und Röntgendetektor ein Vorfilter zur Strahlaufhärtung des Röntgenstrahls eingebracht wird. Dadurch wird eine Signalverbesserung und damit eine genaueren Auswertung der Ergebnisse erreicht.

Eine weitere vorteilhafte Weiterbildung der Erfindung sieht vor, dass der Vorfilter aus Eisen, Kupfer oder Aluminium ist. Mit diesen Vorfiltern ist es möglich, die Röntgenstrahlung aufzuhärten und gleichzeitig eine ausreichende Helligkeit mit den Röntgendetektoren zu erreichen. Die Strahlaufhärtung ermöglicht eine Signalverbesserung und damit eine schneller Detektion des photoelektrischen Effekts zur besseren Bestimmung der maximalen Energie der Elektronen und damit der angelegten Hochspannung.

Eine weitere vorteilhafte Weiterbildung der Erfindung sieht vor, dass der Vorfilter eine Dicke im Bereich von 0,1 mm bis 10 mm, bevorzugt zwischen 0,1 mm und 3 mm, aufweist. Die Vorfilter dienen der Strahlaufhärtung und müssen dem zu prüfendem Hochspannungsbereich angepasst werden. Bei Spannungen im Bereich von 40 kV wird keine Aufhärtung benötigt, da der erste Filter, auch Prüffilter genannt, und der zweite Filter, auch Referenzfilter genannt, schon sehr stark absorbieren. Bei Spannungen im Bereich von 90 kV bringt ein Vorfilter mit 2-3 mm Eisen eine erhebliche Verbesserung der Signale.

Eine weitere vorteilhafte Weiterbildung der Erfindung sieht vor, dass die Sollwerte der Hochspannung entweder in aufsteigender oder absteigender Reihenfolge durchlaufen werden. Dadurch muss nicht hin und her gesprungen werden bei der Einstellung der Hochspannungswerte.

Eine weitere vorteilhafte Weiterbildung der Erfindung sieht vor, dass das zweite Material des Filtersets aus den folgenden Gruppe von Materialien ausgewählt ist: Uran, Thorium, Bismut, Blei, Thallium, Quecksilber, Gold, Platin, Iridium, Wolfram, Tantal, Erbium, Gadolinium, Neodym, Cer, Barium, Tellur, Zinn, Silber, Palladium, Molybdän. Dadurch ist es möglich, einen Hochspannungsgenerator im Spannungsbereich von etwa 20 kV bis etwa 120 kV zu kalibrieren. Die Messgenauigkeit der Hochspannung liegt hierbei bei unter ±1 %.

Eine weitere vorteilhafte Weiterbildung der Erfindung sieht vor, dass das Filterset weitere zweite Filter aus der genannten Gruppe der zweiten Materialien aufweist. Je mehr Filter verwendet werden, desto größer ist der Bereich der Hochspannung, in dem ohne Austausch des Filtersets eine Kalibrierung des Hochspannungsgenerators durchgeführt werden kann.

Eine weitere vorteilhafte Weiterbildung der Erfindung sieht vor, dass das erste Material des Filtersets Kupfer ist. Die K-Kante von Kuper liegt mit 8,98 kV ausreichend weit weg von den K-Kanten der zweiten Filtermaterialien, die im Bereich der Hochspannungswerte liegen, in dem die Kalibrierung vorgenommen wird.

Eine weitere vorteilhafte Weiterbildung der Erfindung sieht vor, dass mindestens eines der Filter des Filtersets eine Dicke im Bereich von 1 µm bis 10 mm, bevorzugt zwischen 10 µm und 2 mm, aufweist. Die Dicke der jeweiligen Filter wird so gewählt, dass die Signalstärke hinter dem jeweiligen Filter ausreichen stark ist. Bei niedrigen Spannungen, wie beispielsweise im Bereich von 40 kV, werden sehr dünne Filter mit einer Dicke von wenigen hundert Mikrometern benötigt, da die Röntgenstrahlung bei diesen Energien nur eine geringe Eindringtiefe besitzt. Bei höheren Spannungen, wie beispielsweise 80 kV, müssen die Filter dicker gewählt werden. Die gewählten Dicken liegen hier üblicherweise bei vielen hundert Mikrometern bis wenigen Millimetern.

Weitere Vorteile und Einzelheiten der Erfindung werden anhand der in den Figuren dargestellten Ausführungsbeispiele erläutert. Die Figuren zeigen:
- Figur 1: eine schematische Darstellung eines Aufbaus zur Durchführung des erfindungsgemäßen Verfahrens,
- Figur 2: eine Draufsicht auf ein Filterset zur Durchführung des erfindungsgemäßen Verfahrens und
- Figur 3: eine Darstellung der Absorptionskoeffizienten eines ersten und eines zweiten Filtermaterials.

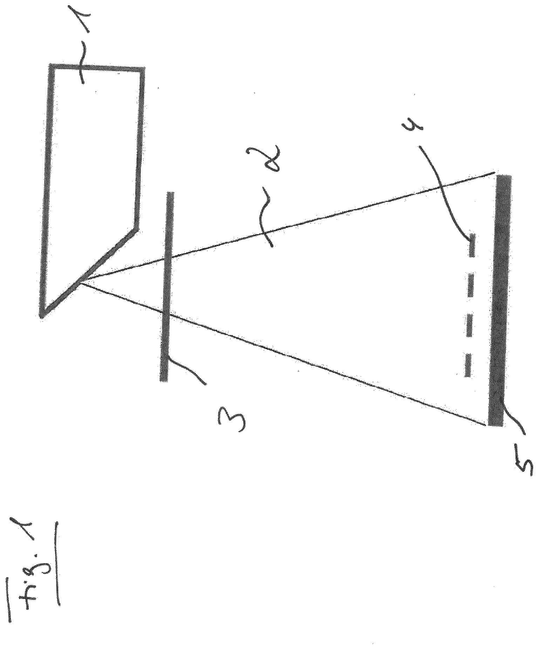

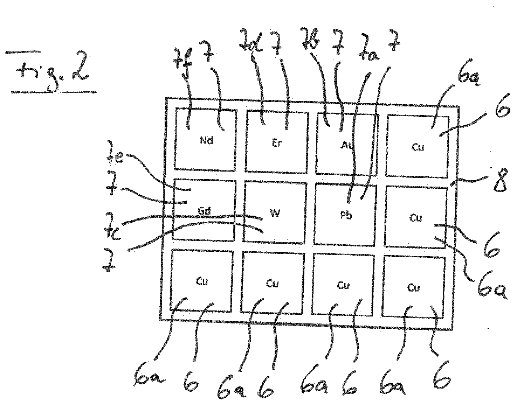

Zuerst wird der Aufbau einer Anordnung zur Durchführung eines erfindungsgemäßen Kalibrierungsverfahrens für einen Hochspannungsgenerator einer Röntgenröhre 1 anhand der Figuren 1 und 2 kurz beschrieben. Danach wird die Durchführung des erfindungsgemäßen Kalibrierungsverfahrens ausführlich beschrieben.

In Figur 1 ist ein schematischer Aufbau zur Durchführung eines erfindungsgemäßen Verfahrens dargestellt. Eine Röntgenröhre 1 emittiert einen Röntgenstrahl 2, dessen Energie und Wellenlänge von der an der Röntgenröhre 1 tatsächlich angelegten Hochspannung abhängt. In dem Röntgenstrahl 2 ist ein Vorfilter 3 angeordnet, der zur Strahlaufhärtung dient. In der Nähe eines Röntgendetektor 5 - im Ausführungsbeispiel ein Flächendetektor - ist parallel zur Oberfläche des Röntgendetektors 5 ein Filterset 4 angeordnet. Als Vorfilter 3 kann beispielsweise ein Eisenplättchen mit einer Dicke von 2 mm verwendet werden.

Bei einer Röntgenröhre definiert die anliegende Hochspannung die kinetische Energie der Elektronen und diese wiederum die maximale Energie der Röntgenstrahlung. Da die Absorption der Röntgenstrahlung in Materialien mit steigender Energie der Röntgenstrahlung geringer wird, ist die maximale Energie der Röntgenstrahlung für den Strahlenschutz von großer Bedeutung. Eine Überprüfung der Hochspannung ist aktuell mit hohem Aufwand verbunden, da die Röntgenröhre 1 und der Hochspannungsgenerator elektrisch mit einem Spannungsmessteiler verbunden werden müssen.

In Figur 2 ist die Draufsicht auf ein Ausführungsbeispiel eines zur Durchführung eines erfindungsgemäßen Kalibrierungsverfahrens benötigtes Filterset 4 dargestellt. Auf einer Trägerplatte 8 aus einem rigiden Material, das möglichst transparent für den Röntgenstrahl 2 ist, beispielsweise Kohlenstoff, Plexiglas oder Kohlefaser, sind insgesamt zwölf Filter aus (teilweise) unterschiedlichen Materialien aufgebracht. Erfindungsgemäß ist zwingend ein erstes Material 6 notwendig, dessen K-Kante 9 weit entfernt von der Energie des Röntgenstrahls 2 liegt, bei dem Wert der Hochspannung, für den der Hochspannungsgenerator kalibriert werden soll.

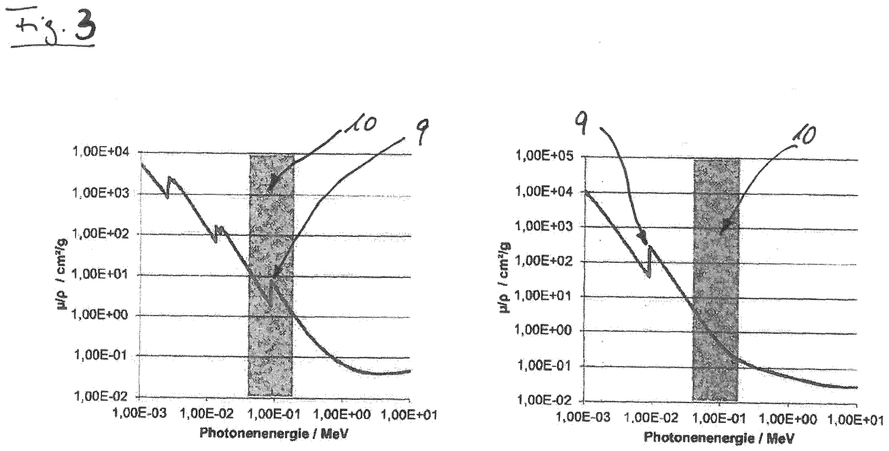

Im vorliegenden Ausführungsbeispiel wird für einen ersten Filter 6 als erstes Material 6a Kupfer verwendet. Dessen Absorptionskoeffizient ist in dem rechten Teil der Figur 3 dargestellt. Die K-Kante 9 von Kupfer liegt bei einer Photonenenergie von 8,98 keV deutlich unterhalb eines grau dargestellten Kalibrierungsbereichs 10. Insgesamt sind sechs erste Filter 6 aus dem ersten Material 6a vorhanden, die entlang der unteren und rechten Kante der Trägerplatte 8 angeordnet sind. Die ersten Filter 6 weisen eine Größe von 25 mm x 25 mm auf.

Die restlichen zweiten Filter 7 sind aus sechs verschiedenen zweiten Materialien 7a-f, Blei, Wolfram, Gadolinium, Gold, Erbium und Neodym. Die zweiten Materialien 7a-f müssen die Eigenschaft haben, dass ihre jeweilige K-Kante innerhalb des Kalibrierungsbereichs 10 liegt. Aus dem Verlauf des Absorptionskoeffizienten des im linken Teil der Figur 3 dargestellten Bleis als zweites Material 7a - ist zu sehen, dass dessen K-Kante 9 bei 88,0 keV liegt und sich in dem grau dargestellten Kalibrierungsbereichs 10 befindet; seine anderen Kanten liegen deutlich außerhalb dieses Kalibrierungsbereichs 10 bei niedrigeren Photonenenergien. Für die anderen zweiten Materialien 7b-f gilt entsprechendes; ihre jeweilige K-Kante liegt bei 80,7 keV für Gold (zweites Material 7b), 69,5 keV für Wolfram (zweites Material 7c), 57,5 keV Erbium (zweites Material 7d), 50,24 keV für Gadolinium (zweites Material 7e) und 43,57 keV für Neodym (zweites Material 7f). Die zweiten Filter 7 weisen die gleiche Größe auf wie die ersten Filter 6, also 25 mm x 25 mm.

Im Folgenden wird näher auf das erfindungsgemäße Verfahren eingegangen. Zur Durchführung des erfindungsgemäßen Kalibrierungsverfahrens wird das Filterset 4 in den Röntgenstrahl 2 gebracht, wie es in Figur 1 dargestellt ist. Nach Abschluss des Kalibrierungsverfahrens, wird es aus dem Röntgenstrahl 2 entfernt, um keine Störung der Arbeit der Anlage zu erzeugen, beispielsweise bei der zerstörungsfreien Untersuchung von Gussteilen.

Nachdem ein Sollwert an dem Hochspannungsgenerator eingestellt wurde, werden zunächst die Durchlasssignale hinter dem Filterset 4 für jeden ersten Filter 6 - wird auch als Referenzfilter bezeichnet- und jeden zweiten Filter 7 - wird auch als Prüffilter bezeichnet- gemessen. Die genaue Definition der Filterdicken und Materialien hängt von der Energie des Röntgenstrahls 2 bei der tatsächlich anliegenden Hochspannung ab. Im Folgenden wird zur Vereinfachung nur auf die Filter 6, 7 mit dem ersten Material 6a (Kupfer) und für das zweite Material 7a Blei eingegangen. Die verwendeten Dicken dieser beiden Materialien 6a, 7a liegen beispielsweise bei 0,5 mm für Blei und 2 mm für Kupfer. Die angelegte Hochspannung wird über einen Bereich in vorgegebenen Schrittweiten, beispielsweise von 0,1 kV, verändert. Die gemessenen Signale werden dann zueinander ins Verhältnis gesetzt und als Funktion der Hochspannung aufgetragen. Das Maximum der Verhältniskurve wird ermittelt; dieses stellt die Energie der K-Kante 9 des Bleis dar. Alternativ kann man aus der Verhältniskurve näherungsweise zwei Geraden bestimmen: eine für Werte unterhalb der K-Kante 9 des Bleis und eine andere für Werte oberhalb der K-Kante 9 des Bleis. Diese beiden Geraden schneiden sich bei der Energie, die der K-Kante 9 des Prüffilters (zweites Filter 7), also des Bleis (88,005 keV), entspricht.

Wenn eine Kalibrierung des Hochspannungsgenerators über einen weiten Spannungsbereich, beispielsweise von 40 kV bis 95 kV erfolgen soll, ist es sinnvoll, für verschiedene Teilabschnitte dieses Spannungsbereichs die Verhältniswerte für verschiedene zweite Materialien 7a-7f zum gleichbleibenden ersten Material 6a Kuper heranzuziehen, deren jeweilige K-Kante 9 in dem gerade durchlaufenen Spannungsbereich liegt. Zu Beginn wird eine Spannung von 40 kV und eine Targetleistung von 10 W eingestellt. Nachdem die Aufnahme der Durchlasssignale für die Filter erfolgt ist, wird die Spannung um beispielsweise 0,1 kV - nominell am Hochspannungsgenerator - erhöht und die Aufnahme der Durchlasssignale erneut vorgenommen. Dies wird bis zu der gewünschten Endspannung durchgeführt. So kann beispielsweise im Bereich von 45 kV bis 55 kV Gadolinium (zweites Material 7e mit einer K-Kante 9 bei 50,24 keV), von 55 kV bis 65 kV Erbium (zweites Material 7d mit einer K-Kante 9 bei 57,49 keV), von 65 kV bis 75 kV Wolfram (zweites Material 7c mit einer K-Kante 9 bei 69,53 keV), von 75 kV bis 85 kV Gold (zweites Material 7b mit einer K-Kante 9 bei 80,73 keV) und von 85 kV bis 95 kV Blei (zweites Material 7a mit einer K-Kante 9 bei 88,00 keV) herangezogen werden. Hieraus ersieht man allerdings, dass das erfindungsgemäße Verfahren in seinem möglichen Spannungsbereich - insbesondere bezüglich seiner Obergrenze - begrenzt ist. Man könnte bis Uran als Material für den zweiten Filter 7 gehen; dann würde man bei etwa 115 kV die höchste überprüfbare Hochspannung erreichen. Die Erweiterung des Messbereiches mit Transuranen als Filter ist zwar möglich, ist aber nicht sinnvoll, da die Halbwertszeiten der Transurane in der Regel viel zu kurz sind.

Zusätzlich kann auch noch bezüglich verschiedener Spannungsbereiche der Vorfilter 3 variiert werden. Beispielsweise kann bis zu einer Spannung von 65 kV kein Vorfilter 3 verwendet werden, für den Spannungsbereich von 65 kV bis 75 kV dann ein Vorfilter 3 aus 2 mm Eisen und darüber hinaus ein Vorfilter 3 aus 3 mm Eisen. Damit wird eine bessere Strahlaufhärtung erreicht und der photoelektrische Effekt kann schneller nachgewiesen werden.

Erfindungsgemäß erfolgt noch eine Berechnung des Unterschieds des am Hochspannungsgenerator eingestellten Wertes der Hochspannung (der Sollwert der Hochspannung) für das aufgenommene Röntgenbild, für das ermittelt wurde, dass es zur K-Kante 9 des betrachteten zweiten Materials 7a-f gehört. Abschließend wird dieser Sollwert der Hochspannung am Hochspannungsgnenerators um den berechneten Unterschied korrigiert.

Zusammenfassend kann festgehalten werden, dass die Basis des erfindungsgemäßen Verfahrens der photoelektrische Effekt ist. Es werden dabei die materialspezifischen Absorptionskanten (insbesondere die K-Kanten 9) verschiedener Elemente genutzt, um die gerade tatsächlich am Hochspannungsgenerator anliegende Hochspannung zu messen; diese unterscheidet sich in der Regel von der nominell angezeigten Hochspannung. Die Messmittel beschränken sich hierbei auf die Instrumente, die in einem Standard-Röntgensystem vorhanden sind (Röntgendetektor5 und Röntgenröhre 1). Das einzig zusätzliche Messmittel (abgesehen von dem optionalen Vorfilter 3 zur Strahlaufhärtung) ist ein Filterset 4, welches Filter 6, 7 verschiedener Materialien 6a, 7a-7f enthält. Es werden die Signale hinter den verschiedenen Filtern 6, 7 gemessen und aus diesen Messdaten die tatsächliche am Hochspannungsgenerator anliegende Hochspannung ermittelt. Durch Subtraktion des ermittelten tatsächlichen Hochspannungswert gegenüber dem am Hochspannungsgenerator eingestellten nominellen Wert, kann der Offset zwischen den beiden Werten ermittelt werden und eine Kalibrierung des Hochspannungsgenerators durchgeführt werden.

Das erfindungsgemäße Verfahren stellt eine gute Möglichkeit dar, die Hochspannung eines Röntgensystems zu überprüfen. Der größte Vorteil im Vergleich zum Spannungsteiler-Verfahren liegt in der Handlichkeit der Messmittel. Beim Spannungsteiler-Verfahren werden zwei Hochspannungskabel, der Spannungsmessteiler und ein Voltmeter benötigt, während das Filterset 4 mit einer Größe von 200 mm x 130 mm x 10 mm und einem Gewicht von etwa 300 g beim erfindungsgemäßen Verfahren leicht zu verstauen und zu transportieren ist. Die restlichen Messmittel sind im System vorhanden. Ein weiterer großer Vorteil ist, dass das Filterset 4 nicht kalibriert werden muss, da die K-Kanten 9 Materialkonstanten sind, die sich unter keinen Umständen ändern. Selbst wenn beispielsweise die seltenen Erden oxidieren ändert sich an der Position der K-Kante 9 nichts. Es würde lediglich die K-Kante 9 von Sauerstoff hinzukommen. Da diese aber weit von den K-Kanten 9 der seltenen Erden entfernt ist, würde dies die Messungen nicht beeinflussen. Ein weiterer Vorteil des erfindungsgemäßen Verfahrens liegt darin, dass die benötigten zusätzlichen Mittel, also das Filterset 4 in jedes System gängige, momentan auf dem Markt vorhandene System verbaut werden kann. Damit könnten regelmäßige und voll automatische Überprüfungen der Hochspannung stattfinden. Aus Sicht des Strahlenschutzes wird die Sicherheit der Kabinen erhöht, da eine fehlerhafte zu hohe Spannung, die zu Strahlungslecks führen kann, mit diesem Verfahren aufgedeckt würde. Die gewonnen Daten können auch als frühzeitige Hinweise auf Ausfälle oder sonstige Probleme des Hochspannungsgenerators genutzt werden.

### Bezugszeichenliste

- 1: Röntgenröhre
- 2: Röntgenstrahl
- 3: Vorfilter
- 4: Filterset
- 5: Röntgendetektor
- 6: erster Filter
- 6a: erstes Material
- 7: zweiter Filter
- 7a-f: zweites Material
- 8: Trägerplatte
- 9: K-Kante
- 10: Kalibrierungsbereich

## Patentansprüche

1. Verfahren zur Kalibrierung eines Hochspannungsgenerators einer Röntgenröhre (1) in einem Röhren-Detektor-System in einem vorgebbaren Hochspannungsbereich mit folgenden Schritten:
a) einbringen eines Filtersets (4) mit mindestens zwei Filtern (6, 7) aus unterschiedlichen Materialien (6a, 7a-f) in den Röntgenstrahl (2) zwischen der Röntgenröhre (1) und einem Röntgendetektor (5), wobei das erste Material (6a) des ersten Filters (6) seine K-Kante (9) außerhalb des vorgebbaren Hochspannungsbereichs und das zweite Material (7a-f) des zweiten Filters (7) seine K-Kante (9) innerhalb des vorgebbaren Hochspannungsbereichs hat;
b) einstellen eines Sollwertes der Hochspannung an dem Hochspannungsgenerator der Röntgenröhre (1) und aufnehmen eines Röntgenbildes des Filtersets (4) durch den Röntgendetektor (5);
c) aufnehmen weiterer Röntgenbilder des Filtersets (4) bei anderen Sollwerten der Hochspannung an dem Hochspannungsgenerator der Röntgenröhre (1);
d) bilden des Verhältnisses zwischen den Signalen in den Röntgenbildern für das erste Material (6a) und das zweite Material (7a-f) für jeden einzelnen Sollwert der Hochspannung;
e) bestimmen des Sollwertes der Hochspannung anhand der Einstellung am Hochspannungsgenerator, bei dem das Verhältnis einen Extremwert aufweist;
f) berechnen des Unterschieds dieses Sollwertes der Hochspannung mit dem Wert der K-Kante (9) des zweiten Materials (7a-f);
g) korrigieren des Sollwertes der Hochspannung um den berechneten Unterschied.

2. Verfahren nach Patentanspruch 1, wobei zwischen Röntgenröhre (1) und Röntgendetektor (5) ein Vorfilter (3) zur Strahlaufhärtung des Röntgenstrahls (2) eingebracht wird.

3. Verfahren nach Patentanspruch 2, wobei der Vorfilter (3) aus Eisen, Kupfer oder Aluminium ist.

4. Verfahren nach Patentanspruch 2 oder 3, wobei der Vorfilter (3) eine Dicke im Bereich von 0,1 mm bis 10 mm, bevorzugt zwischen 0,1 mm und 3 mm, aufweist.

5. Verfahren nach einem der vorstehenden Patentansprüche, wobei die Sollwerte der Hochspannung entweder in aufsteigender oder absteigender Reihenfolge durchlaufen werden.

6. Verfahren nach einem der vorstehenden Patentansprüche, wobei das zweite Material (7a-f) des Filtersets (4) aus den folgenden Gruppe von Materialien ausgewählt ist: Uran, Thorium, Bismut, Blei, Thallium, Quecksilber, Gold, Platin, Iridium, Wolfram, Tantal, Erbium, Gadolinium, Neodym, Cer, Barium, Tellur, Zinn, Silber, Palladium, Molybdän.

7. Verfahren nach Patentanspruch 6, wobei das Filterset (4) weitere zweite Filter (7) aus der genannten Gruppe der zweiten Materialien (7a-f) aufweist.

8. Verfahren nach einem der vorstehenden Patentansprüche, wobei das erste Material (6a) des Filtersets (4) Kupfer ist.

9. Verfahren nach einem der vorstehenden Patentansprüche, wobei mindestens eines der Filter (6, 7) des Filtersets (4) eine Dicke im Bereich 1 µm bis 10 mm, bevorzugt zwischen 10 µm und 2 mm, aufweist.
